# EUROPEAN PATENT SPECIFICATION

(11) **EP 0 394 168 B1**
(45) Date of publication and mention of the grant of the patent: **04.06.1997**
(21) Application number: 90480043.0
(22) Date of filing: 13.03.1990
(51) Int. Cl.: G06F 17/21

(54) **Shell document with variable document commands**
Kundenspezifisches Dokument mit variablen Dokumentbefehlen
Document personnalisé avec des commandes de document variables

(30) Priority: 17.04.1989 US 339500
(43) Date of publication of application: 24.10.1990
(73) Proprietor: International Business Machines Corporation, Armonk, N.Y. 10504 (US)
(72) Inventor: Bratsch, Tina Louise, Oronoco, Minnesota 55960 (US); Koeller, Paul Douglas, Rochester, Minnesota 55901 (US); Moore, Mitchell Scott, Rochester, Minnesota 55904 (US)
(74) Representative: de Pena, Alain

(56) References cited:
- EP-A- 0 067 303
- EP-A- 0 075 732
- US-A- 4 454 576
- IBM TECHNICAL DISCLOSURE BULLETIN. vol. 29, no. 6, November 1986, NEW YORK US pages 2387 - 2389 'Word Processor having Conditional Text Printing for Mass Mailings'
- IBM TECHNICAL DISCLOSURE BULLETIN. vol. 28, no. 12, May 1986, NEW YORK US pages 5642 - 5643 'Method to Merge Table Data using One-Cell Table Objects'

## Description

The subject invention relates generally to word processing systems, and more particularly, relates to word processing systems for preparation of a number of personalized copies of form documents.

The use of computer and data processing equipment directed to word processing applications is well known in the art. Such systems provide the capability to merge text with data to create complex reports and mass mailings. Millions of letters, for example, are nailed every day which use a form or shell letter combined with inserted data (e.g., name and address).

U.S. Patent No. 4,085,445, teaches a word processing system, which interleaves the printing of letters and envelopes to simplify and speed up mass mailings. In the preferred mode, the data to be inserted is name and address information.

Merging of other data is shown in U.S. Patent No. 4,454,576. However, this reference is primarily directed to a technique for reducing report generation commands to machine dependent language for transliteration between various operator languages.

The IBM 5520 Administrative System is well known as a current system having a powerful capability to create mass mailings and very complex reports. To perform these applications, a document called a Merge Control Document (MCD) is used combined with data from a text file. The MCD will commonly also be called "shell document" herein.

Creation of an MCD or shell document is disclosed in IBM Technical Disclosure Bulletin, Volume 28, Number 12, pages 5642-5643, dated May, 1986, and entitled "Method to Merge Table Data Using One-Cell Table Objects". This technique is useful for generating form letters with specific variable data inserted.

The generation of complex documents of the type described herein is discussed in IBM Technical Disclosure Bulletins:
1) Volume 29, Number 1, pages 406-407, dated June, 1986, entitled "Improved Technique for Printing Multi-Copy Documents";
2) Volume 29, Number 6, pages 2387-2389, dated November, 1986, entitled "Word Processor Having Conditional Text Printing for Mass Mailings"; and,
3) Volume 30, Number 5, pages 184-188, dated October, 1987, entitled "Enhanced Technique for Merging Data from a Second Document".

Each of these teach the use of the IBM DisplayWrite_ Text Instructions to generate such documents. However, these techniques require substantial complexity in the drafting, maintenance and modification of the MCD or shell document.

European Patent Application published with reference No 0 067 303 describes a report generation control system for operating a text processor to produce output reports containing inter-report summary data from data processing-type files. The system is compatible with text pagination functions and is useable by a text entry/revision operator with no programming skills. The system permits the operator to describe the desired report by keying an example page of the report in the exact desired format and then editing the example page by replacing the required variable file data examples with descriptive instructions and by inserting summary instructions. The system scans the edited example page for instructions, breaks it down into logical components and compiles the components into program routines which will produce the desired output report.

European Patent Application published with reference No 0 075 732 describes an improved method and apparatus in an interactive text processing system for creating documents by selectively merging text data from two or more text records by signalling the location in a document at which the insert of text data is to be added, displaying a Merge Tasks Menu which provides an option for executing a merge operation in response to either Switch Code or Named Variable control codes, specifying the identification and location of the text data comprising the Shell Document and the Fill-in Document, and executing the Merge operation based on the specified data and Merge control mode.

The present invention, as claimed, provides a much simpler technique for creating documents that can be used in combination with data to create complex reports and mass mailings. The person creating these documents does not need to understand the concepts of or be able to use a pseudo-programming language. Maintenance and enhancement of the applications can be easily accomplished without fear of ruining the entire application.

To create such documents, the operator defines a shell document. A shell document has common text and at least one document command. Document commands can be either fixed document commands or variable document commands. Fixed document commands are known in the prior art. The present invention teaches variable document commands. Each variable document command has at least one field. The field can be either a variable field or a constant field. Variable fields have a first variable for specifying a table and a second variable for specifying a position within the table where variable data is located. The variable document command can be any command that affects the formatting of a document. Besides include text and include image, other possible variable document commands could be conditional text command (if/then/else), skip lines command, change font command, etc.

This invention makes use of the constant and variable fields in combination with (actually embedded inside) variable document commands to provide the ability to do MCD-type logic within a shell document.

One object of the present invention is to greatly simplify the process of creating and maintaining complex reports and documents.

A second object of the present invention is to provide the capability to expand the concept of variable document commands to other fixed document commands.

A further object of the present invention is to provide a system wherein variable or constant fields may be embedded into variable text document commands, such that the variable fields of the variable document commands may be from a data file.

A further object of the present invention is to provide a system wherein variable document command fields may be modified by changing the data file rather than the variable document command.

These and further objects of the present invention will become apparent from the following description of the preferred embodiments when read in conjunction with the attached drawings.

Fig. 1 is a conceptual drawing of a form letter suitable for mass mailings.

Fig. 2 is a conceptual diagram for the variable text to be inserted into the form letter of Fig. 1.

Fig. 3 is a table of sample data for insertion into the form letter of Fig. 1 arranged as per the prior art.

Fig. 4 is a shell document prepared in accordance with the prior art to produce the form letter of Fig. 1.

Fig. 5 is a table containing similar data as found in the table of Fig. 3 constructed in accordance with the present invention.

Fig. 6 is a shell document prepared in accordance with the present invention to produce the form letter of Fig. 1.

Fig. 7 is a conceptual flowchart for operation of the present invention.

The preferred mode of the present invention is described as incorporated in the IBM Application System/400™. However, those of skill in the art will readily appreciate that the present invention may be implemented with other systems from the description provided herein.

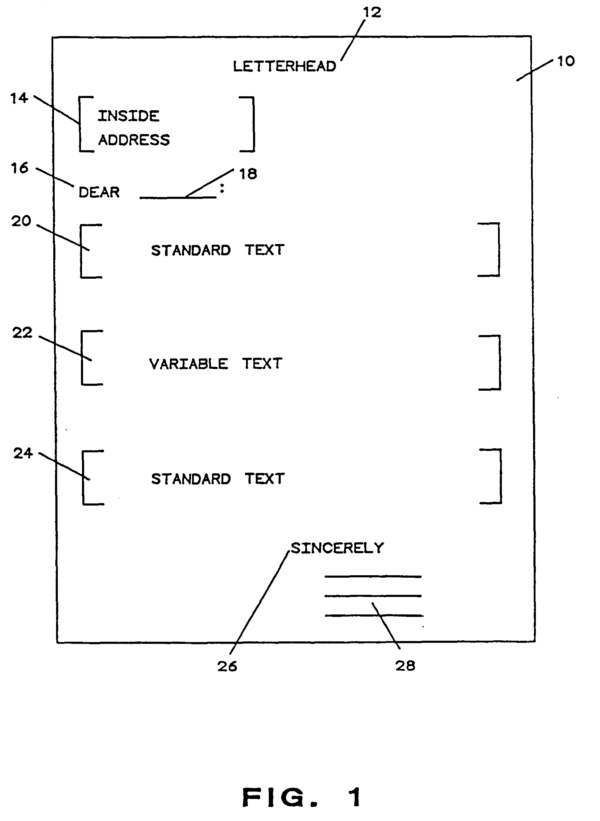

Fig. 1 is a conceptual view of a form letter 10. Such form letters are typically used for mass mailings for advertising and similar purposes. Form letter 10 has a printed letterhead 12 having the name and address of the sender along with other optional information. Letterhead 12 may be embossed using standard prior art techniques.

Inside address 14 contains the name and address of the recipient of the letter. For most mass mailings, each copy of form letter 10 will have a different recipient and hence a different inside address 14. The information for inside address 14 may be built into a data file wherein each record contains the name and address of a different recipient. As such, this data file is simply a mailing list.

The introductory line contains the greeting "Dear" 16 which is common to all copies of form letter 10. Field 18 is wherein the name of the recipient is inserted. This is conceivably the first entry of each record of the mailing list data file.

Standard text 20 is also common to all copies of form letter 10. It may be a single word or two or as much as several pages. It is shown here schematically as a representation of its location.

Variable text 22 is different for different copies of form letter 10. In the most general case, variable text 22 for any copy of form letter 10 may consist of one or more modules of text which are arranged in a particular way to correspond to one or more variables associated with the prospective recipient of the letter. These variables may be unique (e.g., social security number) or may be relatively common (e.g., age or sex). The variables may be a direct portion of the mailing list (e.g., resident state) or may be indirect (e.g., annual income). Variable text 22 may vary from a single word to multiple pages of text.

Standard text 24 is similar to standard text 20. It is the same for all copies of form letter 10. The closing, "Sincerely" 26, is common to all copies of form letter 10. It is in that regard the same as standard text 20 and standard text 24. Signature 28 may be unique to one or a class of copies of form letter 10.

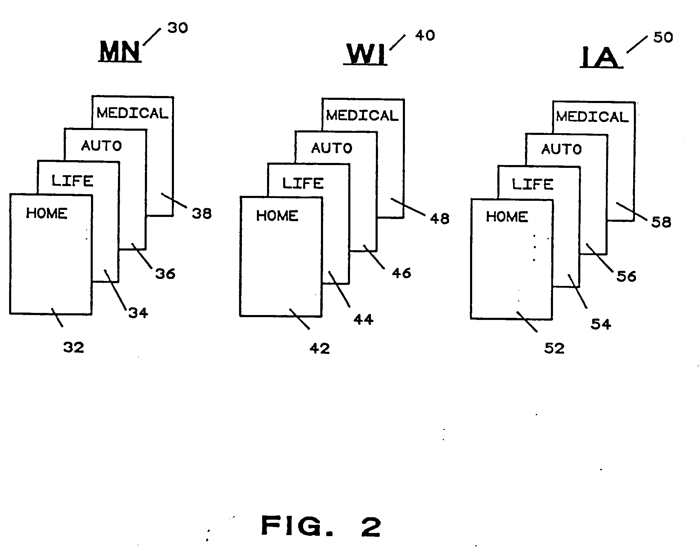

Fig. 2 is an example of variable text prepared for insertion into form letter 10. In the instant example, form letter 10 is in response to requests for information regarding insurance coverage. The sender of form letter 10 has information concerning four basic types of insurance coverage (i.e., home, life, auto and medical). However, because insurance law varies from state to state, the relevant information concerning each type of insurance coverage can vary depending upon the state of residence of the recipient of the information. Therefore, the variable text portions are arranged according to Minnesota, MN 30; Wisconsin, WI 40; and Iowa, IA 50. For clarity only three states are shown.

Home 32 is the variable text which describes the home insurance coverage according to Minnesota law. Home 32 may contain a small amount of text or may be several pages in length. Similarly, home 42 describes the home insurance coverage according to Wisconsin law. Home 52 describes the home insurance coverage according to Iowa law.

Life 34 is that text which describes the life insurance coverage according to Minnesota law. Life 44 and life 54 describe the life insurance coverage under Wisconsin and Iowa laws, respectively. Similarly, auto 36, medical 38, auto 46, medical 48, auto 56 and medical 58 describe auto and medical insurance coverage under the laws of Minnesota, Wisconsin, and Iowa, respectively.

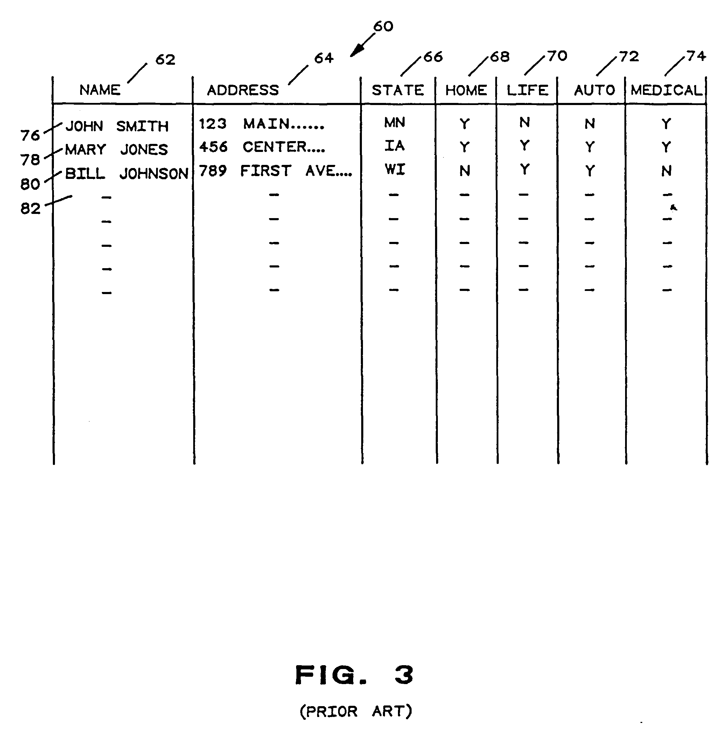

Fig. 3 is table 60 for arranging such data as is required to complete form letter 10 according to the prior art technique. Table 60 contains column 62, NAME; column 64, ADDRESS; column 66, STATE; column 68, HOME; column 70, LIFE; column 72, AUTO; and column 74, MEDICAL. Table 60 has a separate row or record for each recipient. Row 76 corresponds to recipient John Smith. The corresponding entry in column 64 (i.e., 123 Main...) is the street address of recipient John Smith. The corresponding entry in column 66 (i.e., MN) indicates Minnesota as John Smith's state of residence. Column 68 indicates that John Smith wants/needs information concerning home insurance coverage. Columns 70 and 72 show that John Smith is not to get information regarding life and auto insurance coverage. However, column 74 shows that John Smith should get information regarding medical insurance coverage.

Rows 78 and 80 provide the same data for prospective recipients Mary Jones and Bill Johnson, respectively. Additional rows 82 contain data regarding other prospective recipients. Such additional information is omitted for clarity.

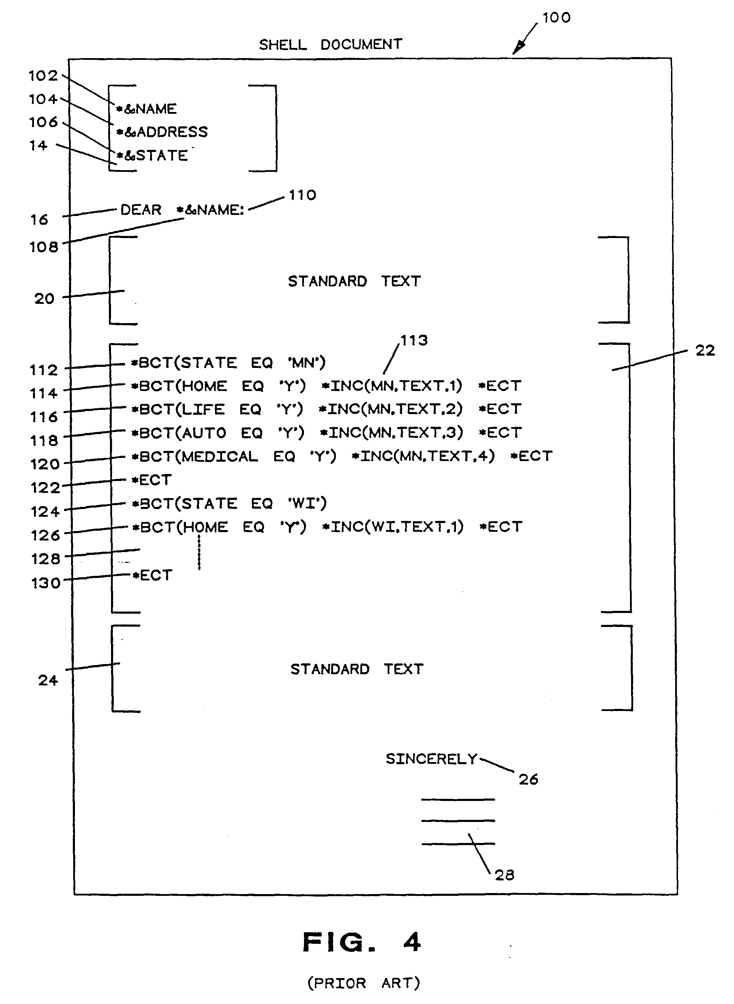

Fig. 4 shows the form of shell document 100 created to produce the various copies of form letter 10, wherein shell document 100 is prepared in accordance with the prior art. Inside address 14 is prepared using the data field fixed document command found in IBM Application System/400™ Office Word Processor. Line 102, for example, is "∗&NAME". The "∗" indicates a document command. The "&" specifies data field. "NAME" is the variable. Line 102 says to go to column 62 (entitled NAME) of table 60 (see also Fig. 3) and enter the contents of one row of column 62 for each succeeding copy of form letter 10. Similarly, line 104 enters the address from column 64, and line 106 enters the state of residence from column 66.

Data field fixed document command 108 (i.e., ∗&NAME) inserts the name in the greeting. Standard text 20, standard text 24, closing 26 and signature 28 are as previously described.

Variable text 22 is implemented as a pseudo-program which must be written by the operator. As can easily be seen from Fig. 4, it is variable text 22 which involves the major complexity of shell document 100. The pseudo-program is performed serially as with ordinary software.

The pseudo-program begins with fixed document command "begin conditional text" (i.e., ∗BCT). This is a branch instruction. If the condition in the parenthesis is met, the next sequential step is executed. If the condition is not met, control is transferred to the next "end conditional text" (i.e., ∗ECT) fixed document command. The only other fixed document command needed for variable text 22 is "include text" (i.e., ∗INC). This command causes the text specified by the variable in the parenthesis to be inserted.

Line 112 determines whether the state of residence of the person named at line 102 is Minnesota. If no, control reverts to the next in line ∗ECT which is found at line 122. If the state of residence is Minnesota, control sequences to line 114. Referring also to Fig. 3, it can be seen that the first copy of form letter 10 will be sent to John Smith (see row 76) who is a resident of Minnesota. Therefore, lines 114, 116, 118 and 120 will be executed for John Smith, but not Mary Jones or Bill Johnson.

Execution of line 114 determines whether column 68 contains "Y" showing that information regarding home insurance coverage is to be sent. If not, control reverts to the ∗ECT at the end of line 114 and then immediately to line 116. For John Smith, column 68 contains "Y". The next fixed document command ∗INC (MN,TEXT,1) then goes to MN 30 and inserts the text of HOME 32 (see also Fig. 2). Control next proceeds to line 116.

The fixed document command of lines 116 and 118 determine whether text should be inserted regarding life and auto insurance coverage. For John Smith (i.e., row 76), no such text is required. However, line 120 will insert MEDICAL 38 because column 74, row 76 contains "Y".

The pseudo-program steps for each of the other states are represented by lines 124, 126, 128 and 130. The detail has been omitted for clarity. However, it can be easily seen that for four types of information, six pseudo-programming lines are needed for each state. For the three states of our example, this would be 18 total pseudo-programming lines. For fifty states, this would be 300 pseudo-programming lines.

It can further be seen from this example that the addition of another type of insurance (e.g., RENTER) would require an additional line in the pseudo-program for each state. Similarly, the addition of a new state will also necessitate large modification to the pseudo-program.

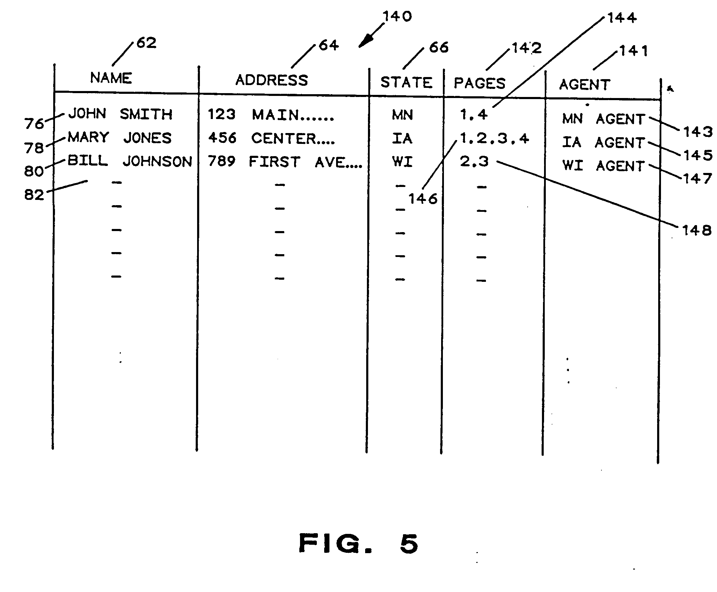

Fig. 5 shows table 60 restructured as table 140 in accordance with the present invention. Table 140 contains column 62, 64, and 66 which are identical to those columns as found in table 60. Columns 68, 70, 72 and 74 of table 60 are replaced with column 142, PAGES, of table 140. Notice that column 142 contains the same information as columns 68, 70, 72 and 74 wherein entry 144 corresponds with row 76, entry 146 corresponds with row 78, and entry 148 corresponds with row 80. Entry 144 means that the copy of form letter 10 sent to John Smith (i.e., row 76) should contain page 1 (i.e., information regarding home insurance coverage) and page 4 (i.e., information regarding medical insurance coverage). Similarly, entry 146 indicates information regarding all four types, and entry 148 indicates information regarding types 2 and 3 only.

Table 140 also contains additional column 141 entitled AGENT. This column points to the image of a signature for each agent within each state. Therefore, MN AGENT 143 represents the signature of the agent for Minnesota. Similarly, IA AGENT 145 and WI AGENT 147 represent the signatures of the agents for Iowa and Wisconsin, respectively.

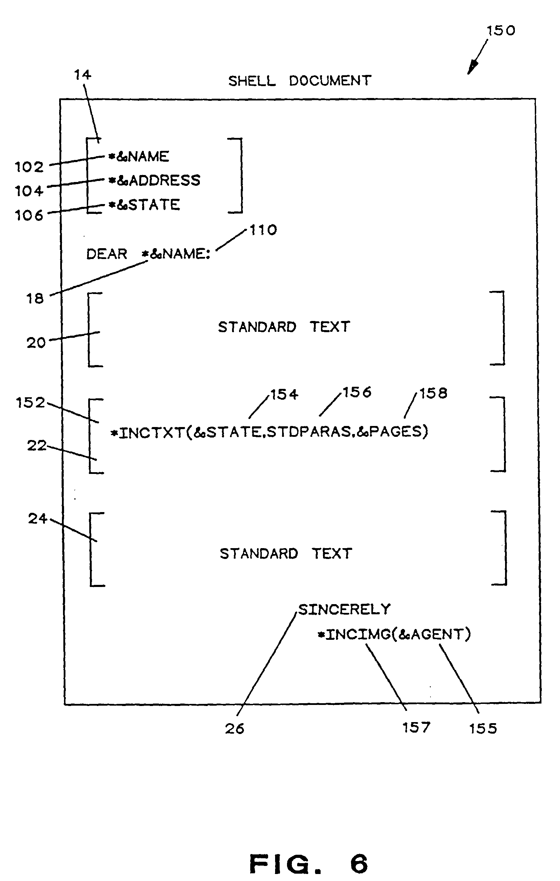

Fig. 6 is a diagram of shell document 150 created in accordance with the present invention. All elements of Fig. 6 are as previously described except the pseudo-program which produces variable text 22 and the signature block 157. The pseudo-program has been replaced by a single variable document command (i.e., ∗INCTXT). No conditional fixed document command (i.e., ∗BCT) is needed because it is assumed that some text will be added for each copy of form letter 10. Furthermore, the ∗INCTXT variable document command may have variable fields.

In the instant example, line 152 indicates where the specified text will be inserted. The first field (i.e., variable field 154, &STATE) says that the text to be inserted is all within the state category (see Fig. 5) defined by column 66 of table 140 at the row of the prospective recipient. The value from column 66 is the name of the document that contains the standard paragraphs (see Fig. 2). Contrast this with line 114 of Fig. 4 in which the first parameter 113 of the ∗INC fixed document command is hard-coded to "MN".

Referring again to Fig. 6, field 156 is hard-coded to "STDPARAS", which is the name of a folder that contains one document for each state. However, field 158 is specified by variable field &PAGES. This data field causes access to column 142 of table 140 for the row of the prospective recipient. In this way, each of the pieces of text to be added is specified by table 140, not by shell document 150. Addition of more states or more types of insurance coverage will not cause any change to shell document 150. Table 140 must change, of course, but modification to table 60 was required using the prior art technique as well.

The remaining change to shell document 150 according to the present invention is in the signature. Referring again to Fig. 4, the prior art technique was to supply signature 28 by actually signing each copy or by printing or stamping the signature. The signature block of form letter 150 is variable and is specified by table 140 (see Figs. 5 and 6).

Form letter 150 contains the variable document command 157, ∗INCIMG. This command causes a variable image (in this case a signature) to be specified by variable field 155 (&AGENT). In operation, table 140 column 141 is consulted according to the row of the specific copy being prepared, and the corresponding signature is inserted as specified by column 141.

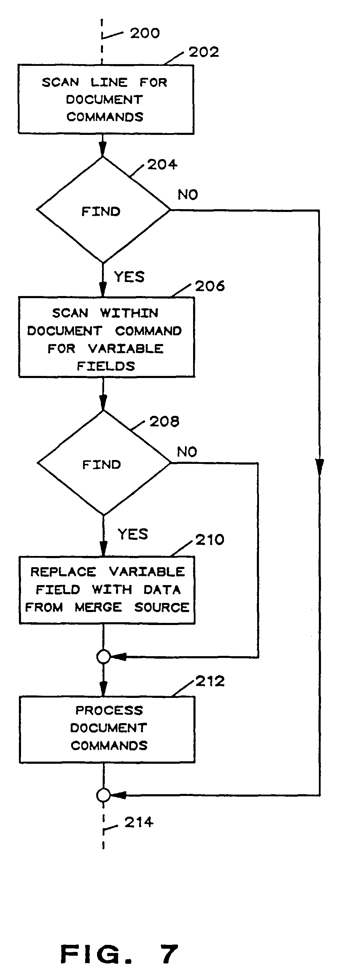

Fig. 7 is a flowchart for software modification required to practice the present invention. The programming stream is entered at 200. Element 202 scans the next line of shell document 150 for a document command. These are signified by a leading asterisk (i.e., "∗"). If none is found, control returns to the previous control stream at 214.

If a document command is found, the fields are searched for a variable field at element 206. In the preferred embodiment, a variable field is indicated by an ampersand within parenthesis, such as line 152 of Fig. 6. Note that line 102 of Fig. 6 does not contain a variable field because the ampersand is not within parenthesis. If a variable field is found at element 208, the document command is a variable document command, and element 210 accesses the data source to acquire the exact value and inserts it into the variable field. If element 208 does not find a variable field, the command is a fixed document command containing only hard-coded fields, and element 210 is skipped. Element 212 processes the document command.

## Claims

1. A method of creating a plurality of form documents, comprising the steps of :
a. defining a shell document (150) having common text (20, 24) and a variable document command (152), said variable document command having a variable field (154, 158) specifying a location of variable data to be included in the form document;
b. inserting a location index (&state, &page) , contained in a table of data (140) for insertion, in said variable field (154, 158);
c. accessing variable data (MN, IA, WI, 144, 146, 148) in the location specified by said location index (&state, &page) inserted in said variable field (154, 158);
d. merging into said shell document variable data as indicated by said accessing step to create one of said plurality of documents; and,
e. repeating said inserting, said accessing and said merging steps once for each additional one of said plurality of form documents to create said plurality of form documents.

2. A method of creating a plurality of documents according to claim 1 wherein said variable field (154, 158) further comprises a first variable for specifying a table (140) and a second variable for specifying a position (66, 142) within said table where variable data is located.

3. A method of creating a plurality of documents according to claim 1 wherein said variable document command (152) is an include text command (*INCTXT) or an include image command (*INCIMG), wherein said step of accessing variable data accesses variable data comprising text or image respectively, and wherein said step of merging into said shell document variable data merges variable data comprising text or image, respectively.

4. A method of creating a plurality of documents according to claim 1 wherein said variable document command (152) is a conditional text command (if, then, else) or a skip lines command or a change font command.

5. A method of creating a plurality of documents according to claim 1 wherein said location index (&state, &page) inserted in said variable field (154, 158) comprises a list (144, 146, 148) of locations of variable data to be included in the form document, said list being of variable length.

6. A data processing system for composing a plurality of form documents having variable data comprising :
a. a shell document (150) common to each of said plurality of form documents having common text (20, 24) and a variable document command (152) for the insertion of said variable data wherein said command contains a variable field (154, 158) specifying a location of variable data to be included in the form document;
b. a table of data (140) for insertion, said table having a plurality of entries (66, 142, 141), each entry corresponding to one of said form documents, wherein each entry comprises a location index (&state, &page);
c. means for inserting said location index (&state, &page) contained in said table of data (140) for insertion, in said variable field (154, 158);
d. means for accessing variable data in the location specified by said location index (&state, &page) inserted in said variable field (154, 158); and
e. means coupled to the accessing means for merging said variable data into said shell document to create one of said plurality of form documents.

7. A data processing system according to claim 6 wherein said variable document command (152) is an include image command (*INCIMG) or an include text command (*INCTXT) wherein said variable data accessed by said accessing means and merged by said merging means comprises an image or text, respectively.

8. A data processing system according to claim 6 wherein said variable field (154, 158) further comprises a first variable for specifying a table (140) and a second variable for specifying a position (66, 142) within said table where variable data is located.

9. A data processing system according to claim 6 wherein said variable document command (152) is a conditional text command (if, then, else), or a skip lines command, or a change font command.

10. A data processing system according to claim 6 wherein said location index (&STATE, &PAGE) inserted in said variable field (154, 158) comprises a list (144, 146, 148) of locations of variable data to be included in the form document, said list being of variable length.

## Patentansprüche

1. Ein Verfahren zur Erstellung einer Vielzahl kundenspezifischer Formdokumente, das aus folgenden Schritten besteht:
a. Definieren eines Rahmendokuments 150 mit gleichbleibendem Text 20, 24 und einem variablen Dokumentbefehl 152, der ein Variablenfeld 154, 158 besitzt, in dem eine Position in das Dokument aufzunehmender variabler Daten angegeben wird;
b. Einfügen eines Positionsindex (&state, &page), der in einer für die Einfügung bestimmten Datentabelle 140 steht, in das Variablenfeld 154, 158;
c. Zugriff auf die variablen Daten 144, 146, 148 (MN, IA, WI) an der Stelle, die durch den in das Variablenfeld 154, 158 eingefügten Positionsindex (&state, &page) bezeichnet wird;
d. Einmischen der in Schritt c genannten variablen Daten in das Rahmendokument, um eines aus der Vielzahl der kundenspezifischen Formdokumente zu erstellen; und
e. Wiederholen der Schritte b bis e für jedes weitere aus der Vielzahl der Formdokumente, um die entsprechende Vielzahl kundenspezifischer Dokumente zu erstellen.

2. Ein Verfahren zur Erstellung einer Vielzahl von Dokumenten gemäß Anspruch 1, wobei das Variablenfeld 154, 158 ferner eine erste Variable zur Angabe einer Tabelle 140 und eine zweite Variable zur Angabe einer Position 66, 142 innerhalb der Tabelle, an der die variablen Daten stehen, enthält.

3. Ein Verfahren zur Erstellung einer Vielzahl von Dokumenten gemäß Anspruch 1, wobei der variable Dokumentbefehl 152 ein Texteinfügungsbefehl (*INCTXT) oder ein Grafikeinfügungsbefehl (*INCIMG) ist, und wobei der Schritt, in dem auf variable Daten zugegriffen wird, variable Daten abruft, die aus Text bzw. Grafik bestehen, und wobei der Schritt, in dem variable Daten in das Dokument eingemischt werden, aus Text bzw. Grafik bestehende variable Daten in das Dokument einfügt.

4. Ein Verfahren zur Erstellung einer Vielzahl von Dokumenten gemäß Anspruch 1, wobei der variable Dokumentbefehl 152 ein Bedingungsbefehl (wenn, dann, andernfalls) oder ein Befehl zum Überspringen von Zeilen oder ein Schriftänderungsbefehl ist.

5. Ein Verfahren zur Erstellung einer Vielzahl von Dokumenten gemäß Anspruch 1, wobei der in das Variablenfeld 154, 158 eingefügte Positionsindex (&state, &page) eine Liste 144, 146, 148 von Positionen, an denen in das Formdokument einzufügende variable Daten stehen, bezeichnet, wobei die Liste eine variable Länge besitzt.

6. Ein Datenverarbeitungssystem zur Erstellung einer Vielzahl kundenspezifischer Formdokumente mit variablen Daten, bestehend aus:
a. einem Rahmendokument 150, das alle diesen Formdokumenten gemeinsam haben, und das gleichbleibenden Text 20, 24 sowie einen variablen Dokumentbefehl 152 enthält, welcher die variablen Daten einfügt, wobei dieser Befehl ein Variablenfeld 154, 158 enthält, das eine Position angibt, an der in das Dokument einzufügende variable Daten stehen;
b. einer Datentabelle 140 mit mehreren Einträgen 66, 142, 141, aus der die Daten eingefügt werden, wobei jeder Eintrag einem der Formdokumente entspricht und einen Positionsindex (&state, &page) enthält;
c. Mitteln zum Einfügen des in der Tabelle für die Einfügung enthaltenen Positionsindex (&state, &page) in das Variablenfeld 154, 158;
d. Mitteln zum Zugreifen auf die variablen Daten an der Position, die durch den in das Variablenfeld 154, 158 eingefügten Positionsindex (&state, &page) bezeichneten wird; und
e. an die Zugriffsmittel gekoppelten Mitteln zum Einmischen der variablen Daten in das Rahmendokument, um eines aus der Vielzahl der Formdokumente zu erstellen.

7. Ein Datenverarbeitungssystem gemäß Anspruch 6, bei dem der variable Dokumentbefehl 152 ein Grafikeinfügungsbefehl (*INCIMG) oder ein Texteinfügungsbefehl (*INCTXT) ist, wobei die vom Zugriffsmittel abgerufenen und vom Einfügungsmittel in das Dokument eingemischten variablen Daten aus einer Grafik oder einem Text bestehen.

8. Ein Datenverarbeitungssystem gemäß Anspruch 6, bei dem das Variablenfeld 154, 158 außerdem eine erste Variable zur Angabe einer Tabelle 140 und eine zweite Variable zur Angabe einer Position 66, 142, an der die Variable innerhalb der Tabelle steht, enthält.

9. Ein Datenverarbeitungssystem gemäß Anspruch 6, bei dem der variable Dokumentbefehl 152 ein Bedingungsbefehl (wenn, dann, andernfalls) oder ein Befehl zum Überspringen von Zeilen oder ein Schriftänderungsbefehl ist.

10. Ein Datenverarbeitungssystem gemäß Anspruch 6, bei dem der in das Variablenfeld eingefügte Positionsindex (&state, &page) eine Liste 144, 146, 148 von Positionen umfaßt, an denen die in das Formdokument einzufügenden variablen Daten stehen, wobei die Liste eine variable Länge besitzt.

## Revendications

1. Procédé de création d'une pluralité de documents formatés, comprenant les étapes consistant à :
a. définir un document type (150) comportant du texte commun (20, 24) et une instruction variable de document (152), ladite instruction variable de document comportant un champ variable (154, 158) spécifiant un emplacement de données variables devant être incluses dans le document formaté,
b. insérer un index d'emplacement (&STATE, &PAGE), contenu dans une table de données (140) destinées à l'insertion, dans ledit champ variable (154, 158),
c. accéder aux données variables (MN, IA, WI, 144, 146, 148) à l'emplacement spécifié par ledit index d'emplacement (&STATE, &PAGE) inséré dans ledit champ variable (154, 158),
d. fusionner dans ledit document type les données variables comme indiqué par ladite étape d'accès afin de créer un document parmi ladite pluralité de documents, et
e. répéter ladite étape d'insertion, ladite étape d'accès et ladite étape de fusion une fois pour chaque document supplémentaire parmi ladite pluralité de documents formatés afin de créer ladite pluralité de documents formatés.

2. Procédé de création d'une pluralité de documents selon la revendication 1, dans lequel ledit champ variable (154, 158) comprend en outre une première variable destinée à spécifier une table (140) et une seconde variable destinée à spécifier une position (66, 142) à l'intérieur de ladite table où sont situées les données variables.

3. Procédé de création d'une pluralité de documents selon la revendication 1, dans lequel ladite instruction variable de document (152) est une instruction d'inclusion de texte (*INCTXT) ou une instruction d'inclusion d'image (*INCIMG), dans lequel ladite étape consistant à accéder aux données variables accède à des données variables constituant respectivement du texte ou une image, et dans lequel ladite étape consistant à fusionner dans des données variables dans ledit document type, fusionne des données variables constituées de texte ou d'image, respectivement.

4. Procédé de création d'une pluralité de documents selon la revendication 1, dans lequel ladite instruction variable de document (152) est une instruction conditionnelle de texte (if, then, else) ou une instruction de saut de lignes ou une instruction de changement de fonte.

5. Procédé de création d'une pluralité de documents selon la revendication 1, dans lequel ledit index d'emplacement (&STATE, &PAGE) inséré dans ledit champ variable (154, 158) est constitué d'une liste (144, 146, 148) d'emplacements de données variables devant être incluses dans le document formaté, ladite liste étant de longueur variable.

6. Système de traitement de données destiné à composer une pluralité de documents formatés comportant des données variables, comprenant :
a. un document type (150) commun à chaque document parmi ladite pluralité de documents formatés comportant du texte commun (20, 24) et une instruction variable de document (152) destinée à l'insertion desdites données variables, dans lequel ladite instruction contient un champ variable (154, 158) spécifiant un emplacement de données variables devant être incluses dans le document formaté,
b. une table de données (140) destinées à l'insertion, ladite table comportant une pluralité d'entrées (66, 142, 141), chaque entrée correspondant à un document parmi lesdits documents formatés, dans laquelle chaque entrée est constituée d'un index d'emplacement (&STATE, &PAGE),
c. un moyen destiné à insérer ledit index d'emplacement (&STATE, &PAGE) contenu dans ladite table de données (140) destinées à l'insertion, dans ledit champ variable (154, 158),
d. un moyen destiné à accéder aux données variables à l'emplacement spécifié par ledit index d'emplacement (&STATE, &PAGE) inséré dans ledit champ variable (154, 158), et
e. un moyen couplé au moyen d'accès destiné à fusionner lesdites données variables dans ledit document type afin de créer un document parmi ladite pluralité de documents formatés.

7. Système de traitement de données selon la revendication 6, dans lequel ladite instruction variable de document (152) est une instruction d'inclusion d'image (*INCIMG) ou une instruction d'inclusion de texte (*INCTXT) dans lequel lesdites données variables auxquelles accède ledit moyen d'accès et fusionnées par ledit moyen de fusion, sont constituées d'une image ou de texte respectivement.

8. Système de traitement de données selon la revendication 6, dans lequel ledit champ variable (154, 158) comprend en outre une première variable destinée à spécifier une table (140) et une seconde variable destinée à spécifier une position (66, 142) à l'intérieur de ladite table, où sont localisées des données variables.

9. Système de traitement de données selon la revendication 6, dans lequel ladite instruction variable de document (152) est une instruction conditionnelle de texte (if, then, else), ou une instruction de saut de lignes, ou une instruction de changement de fonte.

10. Système de traitement de données selon la revendication 6, dans lequel ledit index d'emplacement (&STATE, &PAGE) inséré dans ledit champ variable (154, 158) est constitué d'une liste (144, 146, 148) d'emplacements de données variables devant être incluses dans le document formaté, ladite liste étant de longueur variable.
